# EUROPEAN PATENT APPLICATION

(11) **EP 2 728 711 A1**
(43) Date of publication of application: **07.05.2014**
(21) Application number: 12804578.8
(22) Date of filing: 27.06.2012
(51) Int. Cl.: H02J 17/00, H03H 7/40

(54) **POWER FEEDING SYSTEM DESIGN METHOD AND POWER FEEDING SYSTEM**

(30) Priority: 30.06.2011 JP 2011145296; 13.07.2011 JP 2011154733
(71) Applicant: Yazaki Corporation, Minato-ku Tokyo 108-8333 (JP)
(72) Inventor: KAGAMI, Kazuyoshi, Yokosuka-shi Kanagawa 237-0061 (JP); TANAKA, Shingo, Yokosuka-shi Kanagawa 237-0061 (JP)
(74) Representative: Grünecker, Kinkeldey, Stockmair & Schwanhäusser
(86) International application number: PCT/JP2012/066332
(87) International publication number: WO 2013/002240

(57) **Abstract**

Disclosed is a method of designing a power feeding system achieving critical coupling at a desired resonance frequency without adjusting a size or a distance of a coil, and thus obtain high transmission efficiency over broad band. The method includes designing impedances of the power feeding (3) and The power receiving unit (5) to be small as a resonance frequency between the power feeding helical coil (33) and the power receiving helical coil (51) becomes small by adjusting impedances of the DC/AC converter (31) and the AC/DC converter (51).

## Description

### [Technical Field]

This invention relates to methods of designing power feeding system and to power feeding systems, in particular to methods of designing power feeding system including power feeding unit having a power feeding coil to which power is supplied, and a power receiving unit having a power receiving coil receiving power from the power feeding coil by electromagnetically resonating with the power feeding coil, and to power feeding systems including the power feeding unit and the power receiving unit.

### [Background Art]

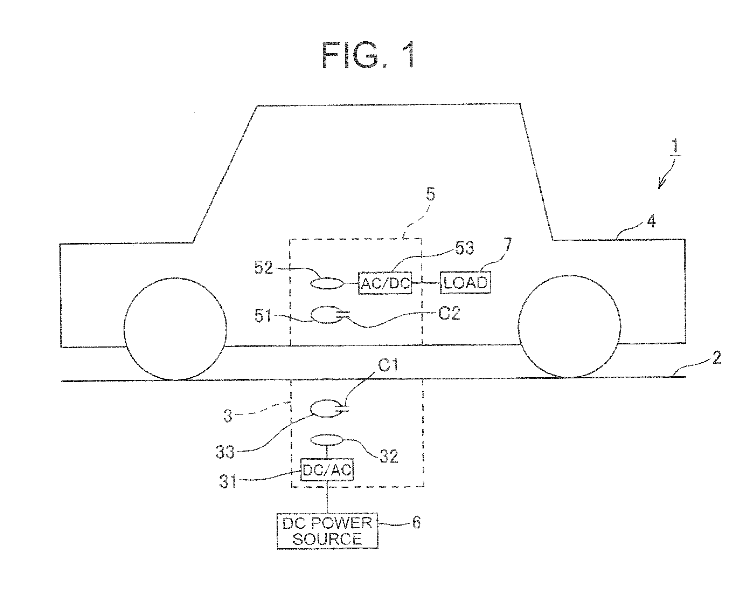

As power feed system mentioned above well known is what is shown in FIG. 1 (refer to non-patent literatures 1 and 2 as listed below) for example. As shown in the figures, a power feeding system 1 is provided with a power feeding unit 3 as a power feeding means, a power receiving unit 5 as a power receiving means. The aforementioned power feeding unit 3 is provided with a power feeding loop antenna 32 to which power is supplied, a power feeding helical coil 33 spaced from, opposed to, in a central axis direction thereof the power feeding loop antenna 32, and electromagnetically coupled with the power feeding loop antenna 32 as a power feeding coil. When power is supplied to the aforementioned power feeding loop antenna 32, the power is transmitted to the power feeding helical coil 33 by electromagnetic induction.

The aforementioned power receiving unit 5 is provided with a power receiving helical coil 51 as a power receiving coil electromagnetically resonating with the power feeding helical coil 33 when arranged spaced from, opposed to, in the central axis direction thereof the power feeding loop antenna 32, and a power receiving loop antenna 52 arranged spaced from, opposed to, in the central axis direction the power receiving helical coil 51 and electromagnetically coupled with the power receiving helical coil 51. When power is fed to the power feeding helical coil 33, the power is wirelessly fed to the power receiving helical coil 51 by resonance of magnetic field.

Furthermore, when power is fed to the power receiving coil 51, the power is fed to the power receiving loop antenna 52 by electromagnetic induction, and is supplied to a load 7 such as a battery that is connected with the power receiving loop antenna 52. According to the power feeding system 1, it is made possible to feed power supplied from the power feeding unit to the power receiving unit in a non-contact manner by electromagnetic resonance between the power feeding helical coil 33 and the power receiving helical coil 51.

It is thought that by providing the aforementioned power receiving unit 5 with the automobile 4, the power feeding unit 3 with a road 2, power is wirelessly fed, employing the aforementioned power feeding system 1, to the battery that is mounted in automobile 4.

It is well known that a coupling between the power feeding helical coil 33 and the power receiving helical coil 51 depends on a size of coil, a between-coils distance, and a frequency. It is ideal to use frequency adjacent to critical coupling in order to obtain transmission efficiency stable over wide band that is neither close coupling nor loose coupling. Conventionally, in order to obtain critical coupling at desired resonance frequency, the size or the between-coils distance of the power feeding helical coil 33 and the power receiving helical coil 51 were thus adjusted.

However, when adjusting the size of the coil as mentioned above, it is required to prepare the power feeding helical coil 33, and the power receiving helical coil 51 of which sizes differ in every desired resonance frequency, incurring cost-up. Also, in the power feeding system 1 wherein the power feeding helical coil 33 is arranged to the road 2, the power receiving helical coil 51 to the automobile 4, it is significantly difficult to adjust the between-coils distance itself. It is, therefore, difficult to obtain critical coupling by adjusting the size of the coil or the between-coils distance, posing such problems that a band is divided in two, or its transmission efficiency is reduced.

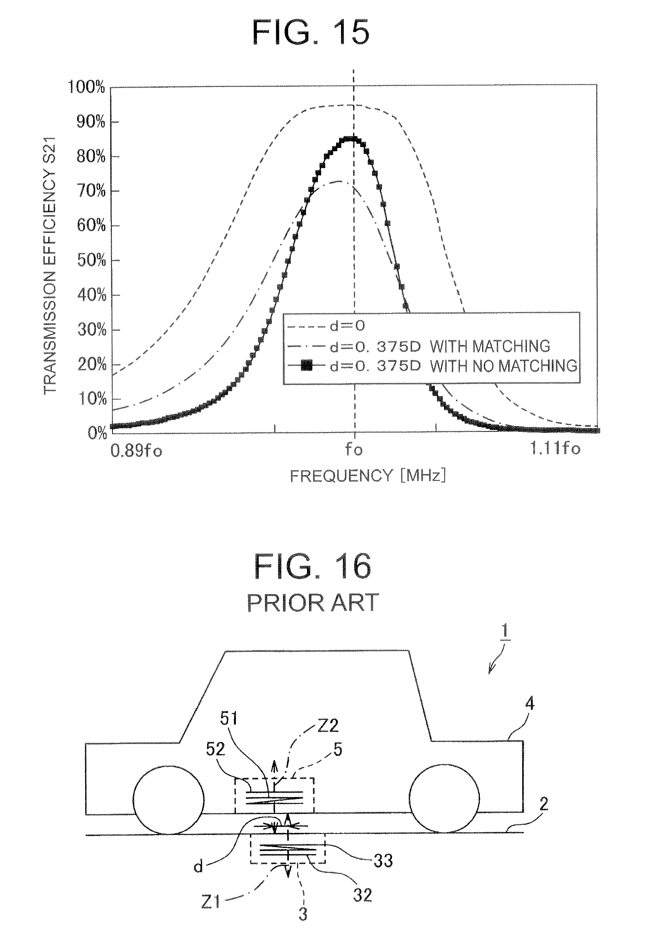

Also, in the aforementioned power feeding system 1, it is difficult to stop the automobile in such a fashion that a central axis Z1 of the power feeding helical coil 33 and a central axis Z2 of the power receiving helical coil 51 become coaxial, possibly inducing misalignment d between the central axes Z1, Z2 as shown in FIG. 16.

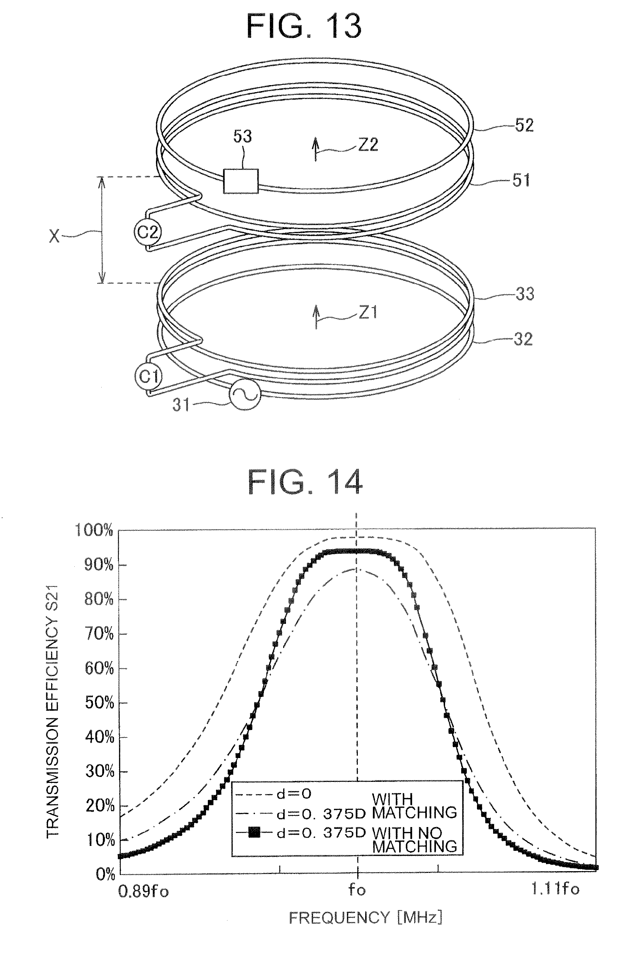

The inventors simulated transmission efficiency S21² of the power receiving loop antenna 52 adjacent to a frequency f0 with misregiatration d between the central axes Z1 and Z2 of 0, and of 0.375D (where D equals a diameter of the power receiving helical coil 51) in the aforementioned power feeding system 1 shown in FIG. 16. Result thereof is shown by dotted line and dashed-dotted line in FIG. 14.

As shown, the transmission efficiency S21² at frequency f0 is of the order of 97% with the misalignment d of 0, whereas it is reduced of the order of 87% with the misalignment d of 0.375D.

### [Citation List]

### [Non Patent Literature]

[NPTL 1]
   A. Kurs, A. Karalis, R. Moffatt, J. D. Joannopoulos, P. Fisher, M. Soljacic, "Wireless power transfer via strongly coupled magnetic resonance", Science, Vol. 317, pp.83-86, July 6, 2007
[NPTL 2]
   M. Soljacic, A. Karalis, J. Joannopoulos, A. Kurs, R. Moffatt, P. fisgeR, "Wireless technology developed to transmit power lights up a 60W bulb in tests" NIKKEI ELECTRONICS 03 December 2007

### [Summary of Invention]

### [Technical Problem]

Therefore, an object of the invention is to provide a method of designing a power feeding system achieving a critical coupling at a desired resonance frequency without adjusting sizes of coils and a between-coils distance of a power feeding unit and a power receiving unit, and obtain a high transmission efficiency over wide band.

### [Solution to Problem]

The inventors studied devotedly to achieve a critical coupling at a desired resonance frequency without adjusting sizes of coils and a between-coils distance of a power feeding unit and a power receiving unit, and obtain a high transmission efficiency over wide band, before finding that coupling condition between the power feeding coil and the power receiving coil can be adjusted by adjusting impedances of the power feeding unit and the power receiving unit, and thus arrived at the present invention.

An invention according to one aspect is related to a method of designing power feeding system including a power feeding unit having a power feeding coil to which power is supplied, and a power receiving unit having a power receiving coil receiving power from the power feeding coil by electromagnetically resonating with the power feeding coil, the method comprising the steps of: designing such that the smaller a resonance frequency between the power feeding coil and the power receiving coil becomes, the smaller impedances of the power feeding and the power receiving unit become, without changing sizes and a between-coils-distance of the power feeding coil and the power receiving coil.

Preferably, the power feeding unit includes a DC/AC converter converting DC power to AC power, the AC power being supplied to the power feeding coil, and wherein the power receiving unit includes an AC/DC converted converting AC power received by the power receiving coil to DC power, the method further comprising the step of; designing such that the smaller the resonance frequency of the power feeding coil and the power receiving coil becomes by adjusting impedances of the DC/AC converter and the AC/DC converter, the smaller the impedances of the power feeding and the power receiving unit become.

Preferably, at least one of the power feeding unit and the power receiving unit includes an adjuster adjusting an impedance of the disposed at least one of the power feeding unit and the power receiving unit, the method further comprising the step of; designing such that the smaller the resonance frequency of the power feeding coil and the power receiving coil becomes by adjusting the impedance of the adjuster, the smaller the impedances of the power feeding and the power receiving unit become.

An invention according to another aspect is related to a power feeding system, comprising: a power feeding unit having a power feeding coil to which power is supplied, a power receiving unit having a power receiving coil receiving power from the power feeding coil by electromagnetically resonating with the power feeding coil, an adjuster disposed to at least one of the power feeding unit and the power receiving unit, and varying an impedance of the disposed at least one of the power feeding unit and the power receiving unit, a position detector detecting a relative position between the power feeding coil and the power receiving coil, an impedance adjuster adjusting the adjuster in accordance with the relative position detected by the position detector so as to adjust the impedance of the at least one of the power feeding unit and the power receiving unit provided with the adjuster.

Preferably, the position detector detects misalignment between center axes of the power feeding coil and the power receiving coil as the relative position.

### [Advantageous Effects of Invention]

According to the invention recited in the one aspect, since the impedances of the power feeding and the power receiving unit are designed to be small as the resonance frequency of the power feeding coil and the power receiving coil becomes small, it is achieved that the critical coupling at the desired resonance frequency without adjusting the sizes of coils and the between-coils distance of the power feeding unit and the power receiving unit, and that the high transmission efficiency can be obtained over wide band.

According to the invention recited in the another aspect, since the impedance adjuster adjusts the adjuster in accordance with the relative position between the feeding unit and the receiving unit detected by the position detector so as to adjust the impedance of the at least one of the feeding unit and the receiving unit to which the adjuster is disposed, it is made possible to reduce deterioration of the transmission efficiency caused by a misalignment d between coils of the power feeding unit and the power receiving unit, and to supply power in high efficiency from the power feeding unit to the power receiving unit.

According to the invention, since the position detector detects the misalignment d between center axes of the feeding unit coil and the receiving unit coil, it is made possible to reduce deterioration of the transmission efficiency caused by a misalignment d between the center axes, and to supply power in high efficiency from the power feeding unit to the power receiving unit.

### [Brief Description of Drawings]

[Fig. 1]
   FIG. 1 is a view illustrating a power feeding system in which a method of the power feeding system is achieved in a first embodiment of the invention;
[Fig. 2]

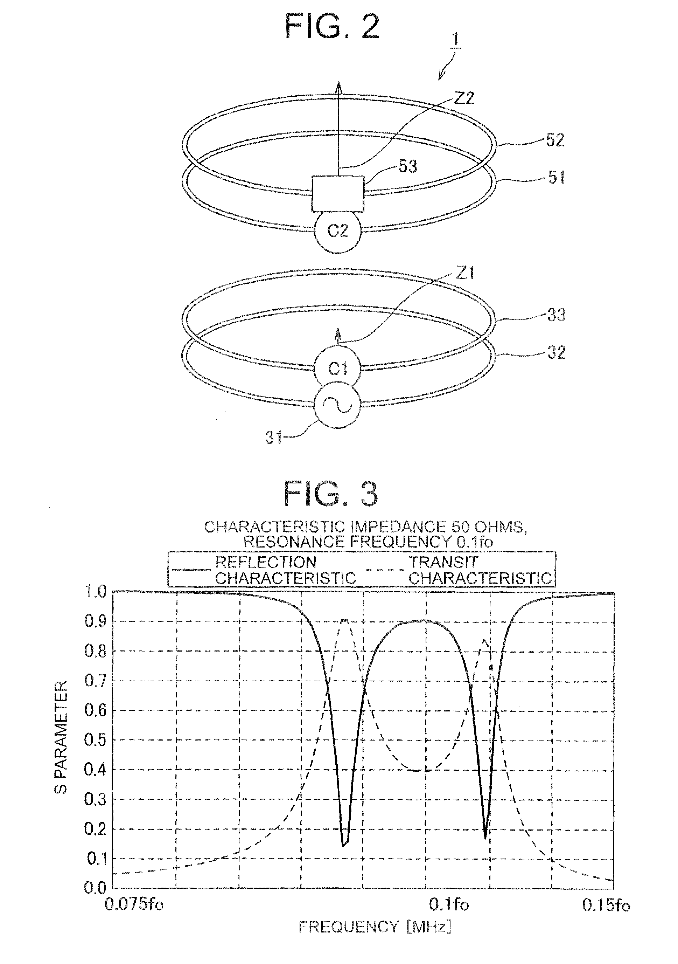

   FIG. 2 is a perspective view illustrating a power feeding loop antenna, a power feeding helical coil, a power receiving helical coil, and a power receiving loop antenna that compose the power feeding system shown in FIG. 1;
[Fig. 3]
   FIG. 3 is a graph illustrating a simulated result of transit characteristic and a reflection characteristic resonance frequency, of 0.1f0 in a power feeding system (product B) with a characteristic impedance of 50 ohms, a resonance frequency of 0.1f0, of the power feeding unit and the power receiving unit;
[Fig. 4]

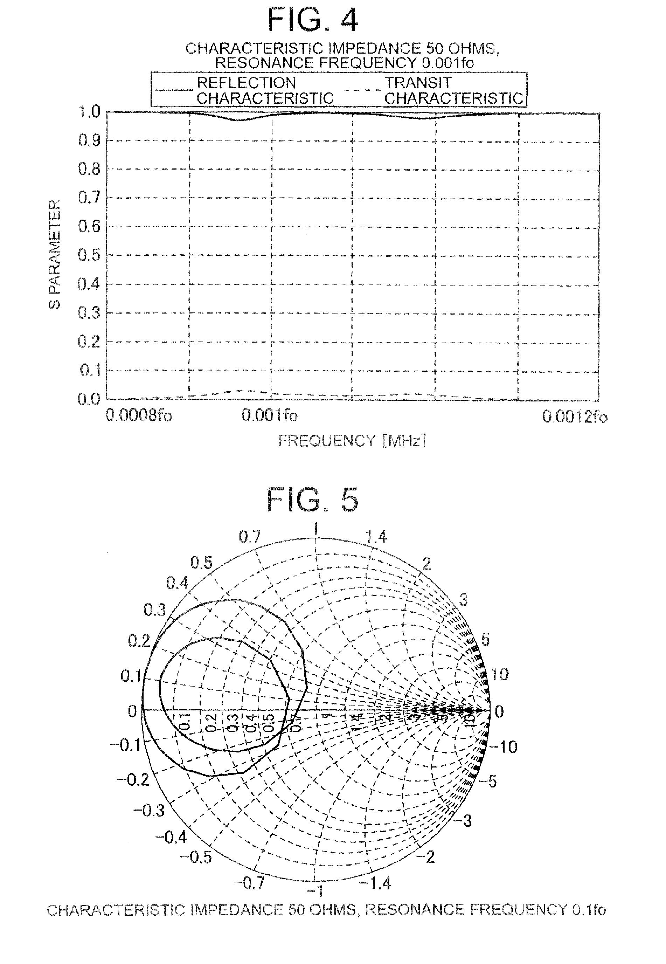

   FIG. 4 is a graph illustrating a simulated result of transit characteristic and a reflection characteristic near frequency 0.001f0 in a power feeding system (product C) with a characteristic impedance of 50 ohms, a resonance frequency of 0.001f0, of the power feeding unit and the power receiving unit;
[Fig. 5]
   FIG. 5 is a Smith-chart illustrating a simulated result of impedance characteristic near frequency of 0.1f0 in the product B;
[Fig. 6]

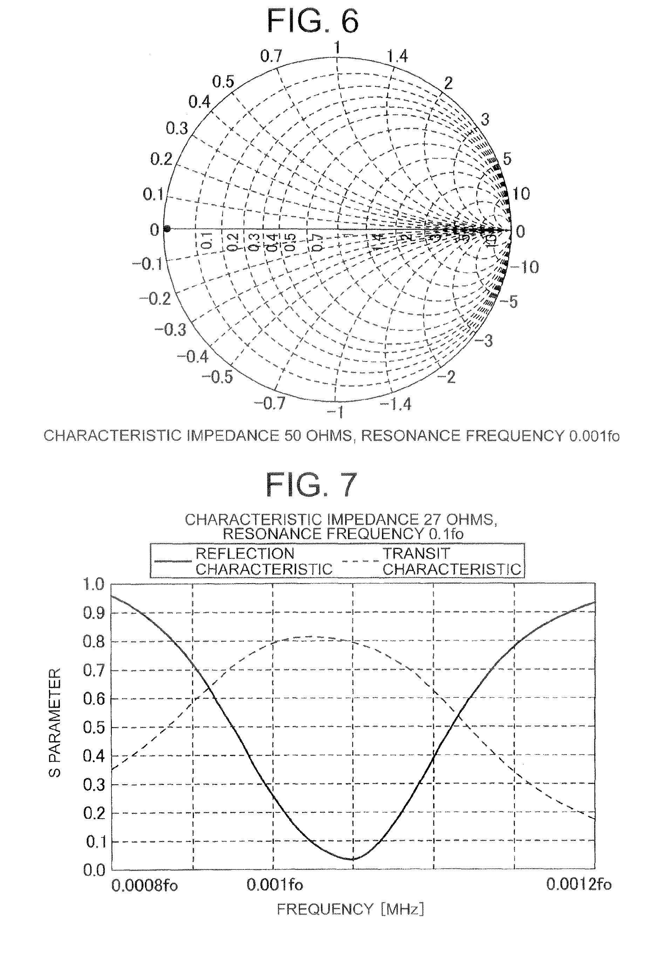

   FIG. 6 is a Smith-chart illustrating a simulated result of impedance characteristic near frequency of 0.001f0 in the product C;
[Fig. 7]
   FIG. 7 is a graph illustrating a simulated result of transit characteristic and a reflection characteristic near frequency of 0.1f0 in a power feeding system (product D) with a characteristic impedance of 27 ohms, a resonance frequency of 0.1f0, of the power feeding unit and the power receiving unit;
[Fig. 8]

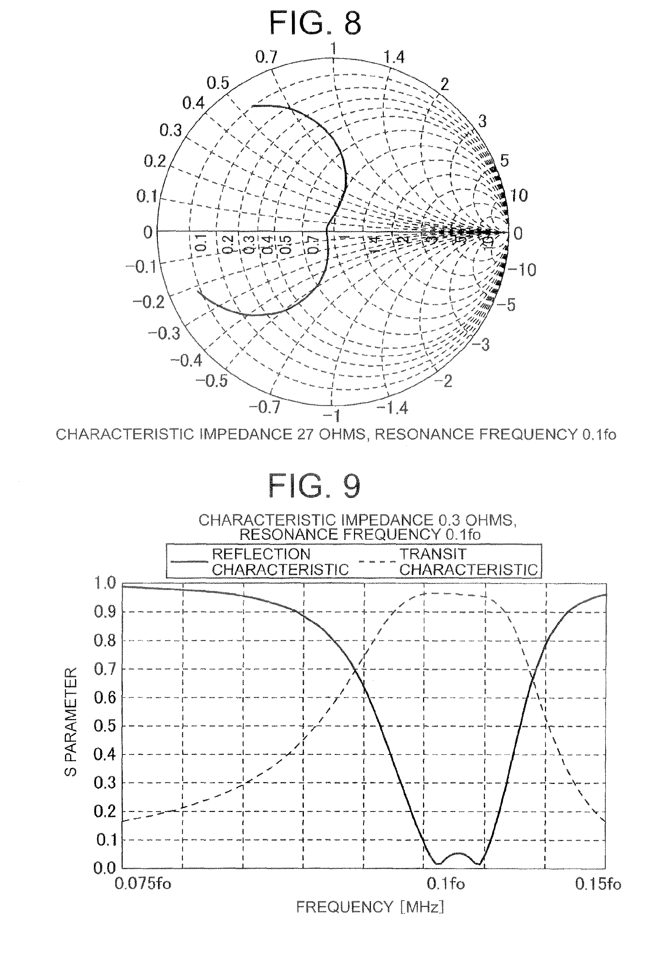

   FIG. 8 is a Smith-chart illustrating a simulated result of impedance characteristic near frequency of 0.1f0 in the product D;
[Fig. 9]
   FIG. 9 is a graph illustrating a simulated result of transit characteristic and a reflection characteristic near frequency of 0.001f0 in a power feeding system (product E) with a characteristic impedance of 0.3 ohms, a resonance frequency of 0.001f0, of the power feeding unit and the power receiving unit;
[Fig. 10]

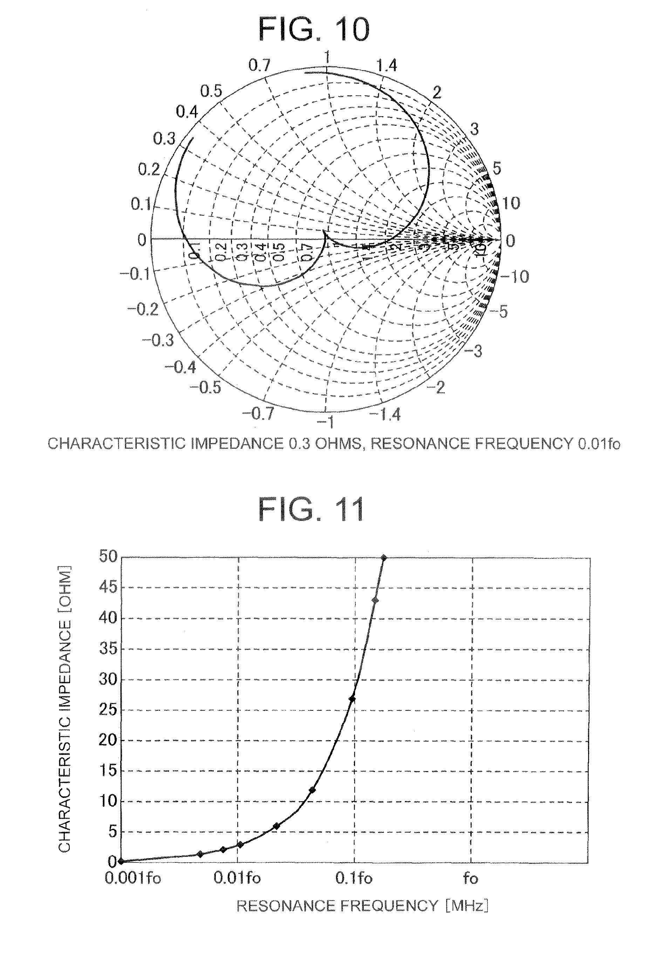

   FIG. 10 is a Smith-chart illustrating a simulated result of impedance characteristic near frequency of 0.001f0 in the product E;
[Fig. 11]
   FIG. 11 is a graph illustrating a relationship between a resonance frequency and a characteristic impedance to be critical coupling;
[Fig. 12]

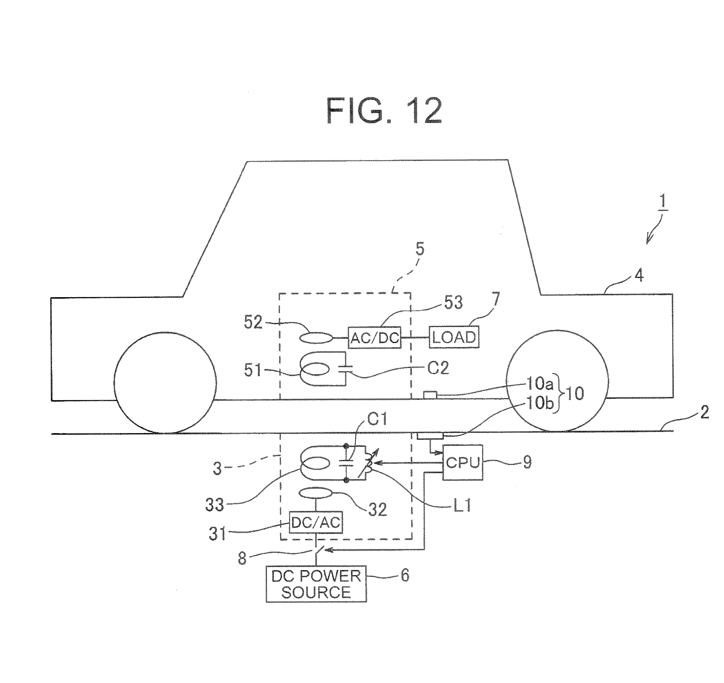

   FIG. 12 is a view illustrating a power feeding system in which a method of the power feeding system is achieved in a second embodiment of the invention;
[Fig. 13]
   FIG. 13 is a perspective view illustrating a power feeding loop antenna, a power feeding helical coil, a power receiving helical coil, and a power receiving loop antenna that compose the power feeding system shown in FIG. 12;
[Fig. 14]
   FIG. 14 is a graph illustrating a simulated result of transmission efficiency S21² near frequency of f0 in a power feeding system in which the helical coils of the power feeding unit and the power receiving unit are turned in two, with matching at misalignment d of center axes of helical coils of the power feeding unit and the power receiving unit of 0, with matching at misalignment d of 0.375D, and with no matching at misalignment d of 0.375D, respectively;
[Fig. 15]
   FIG. 15 is a graph illustrating a simulated result of transmission efficiency S21² near frequency of f0 in a power feeding system in which the helical coils of the power feeding unit and the power receiving unit are turned in one, with matching at misalignment d of center axes of helical coils of the power feeding unit and the power receiving unit of 0, with matching at misalignment d of 0.375D, and with no matching at misalignment d of 0.375D, respectively; and
[Fig. 16]
   FIG. 16 is a view illustrating a conventional power feeding system.

### [Description of Embodiments]

### A first embodiment

Firstly, with reference to FIGS. 1 and 2 a power feeding system is discussed in which a method of designing the power feeding system according is performed to a first embodiment of the present invention. FIG. 1 is the view illustrating the power feeding system in which the method of the power feeding system is achieved in the first impedance of the invention. FIG. 2 is the perspective view illustrating the power feeding loop antenna, the power feeding helical coil, the power receiving helical coil, and the power receiving loop antenna that compose the power feeding system shown in FIG. 1. As shown in FIG. 1, the power feeding system 1 is provided with a power feeding unit 3 as a power feeding means disposed in a road, a power receiving unit 5 as a power receiving means disposed in such a body of an automobile 4.

The power feeding unit 3 is provided with a DC/AC (direct current to alternating current) converter 31 converting direct current power supplied from the direct current power source 6 into an alternating current power, a power feeding loop antenna 32 to which the alternating current power converted by the DC/AC converter 31 is supplied, a power feeding helical coil 33 arranged spaced from, opposed to, in its central axis direction to the power feeding loop antenna 32 and electromagnetically coupled, as a power feeding coil, with the power feeding loop antenna 32, a capacitor C1 connected in parallel with the power feeding helical coil 33.

The power feeding loop antenna 32 is formed into a circular loop shape, and is arranged such as a central axis thereof is arranged in a direction toward the body of the automobile 4 from the road 4, namely, along a vertical direction. Both ends of the power feeding loop antenna 32 have the DC/AC converter 31 connected therewith, and are supplied with the alternating current power converted by the DC/AC converter 31 as mentioned above.

The power feeding helical coil 33 is formed such as to circularly wind a winding wire. In the present embodiment the power feeding helical coil 33 has the winding wire wound in one turn, but possibly wound in two turns or more. The power feeding helical coil 33 is arranged near the automobile 4 of the power feeding loop antenna 32 coaxially with the power feeding loop antenna 32. The power feeding loop antenna 32 and the power feeding helical coil 33 are arranged within their being electromagnetically coupled with each other, namely, within a range that alternating current power supplied to the power feeding loop antenna 32 generates electromagnetic induction in the power feeding feeding helical coil 33, and arranged spaced from each other. The capacitor C1 is provided for adjusting the resonance frequency.

The power receiving unit 5 is provided with a power receiving helical coil 51 as a power receiving coil electromagnetically resonated with the power feeding helical coil 33, a power receiving loop antenna 51 arranged such as opposed to this power receiving helical coil 51 in its central axis direction and electromagnetically coupled with the power receiving helical coil 51, an AC(alternating current)/DC(direct current) converter 53 converting alternating current power received by the power receiving loop antenna 52 into direct current power, and a capacitor C2 connected in parallel with the power receiving helical coil 51.

The power receiving loop antenna 52 is connected to a load 7 such as a car battery through the AC/DC converter 53. The power receiving loop antenna 52 is also formed into a circular loop shape, of which center axis is arranged in a direction toward the road 2 from the body of the automobile 4, namely, along a vertical direction. In the present invention, as shown in FIG. 2, the aforementioned power receiving loop antenna 52 is also arranged to have the same diameter as the aforementioned power feeding loop antenna 32, but the present invention is not limited to this, for example, the diameter of the power receiving loop antenna 52 may be arranged smaller than the aforementioned power feeding loop antenna 32.

The power receiving helical coil 51 is formed such as to circularly wind a winding wire. In the present embodiment the power receiving helical coil 51 has, in the same way as the power feeding helical coil 33, the winding wire wound in one turn, but wound in two turns or more. The power receiving helical coil 51 is arranged to have such as, but not limited to, the same diameter as the aforementioned power feeding helical coil 33, and the diameter of the power receiving unit helical oil 51 may, for example, be arranged smaller than the aforementioned power feeding helical coil 33.

The power receiving helical coil 51 is arranged near the road 2 relative to the power feeding loop antenna 32 coaxially with the power receiving loop antenna 52. The power receiving loop antenna 52 and the power receiving helical coil 51 are arranged within their being electromagnetically coupled with each other, namely, within flow of alternating current power into the power receiving helical coil 51 generating electromagnetic induction in the power receiving loop antenna 52, and spaced from each other. The capacitor C2 is in the same way as the capacitor 1, provided for adjusting the resonance frequency. These capacities of the capacitors C1, C2 are preliminarily adjusted so as the resonance frequency between the power feeding helical coil 33 and the power receiving helical coil 51 becomes desired resonance frequency f0.

According to the aforementioned power feeding system 1, when the power receiving unit 5 in the automobile 4 approaches the power feeding unit 3 disposed in the road 2, and the power feeding helical coil 33 and the power receiving helical coil 51 are opposed to, spaced from, each other in the central axis direction, the power feeding helical coil 33 and the power receiving helical coil 51 are electromagnetically resonated to as to supply power in non-contact manner to the power receiving unit 5 from the power feeding unit 3.

To explain more in detail, when alternating current power applied to the power feeding loop antenna 32, the power is fed to the power feeding helical coil 33 through electromagnetic induction. Namely, to the power feeding helical coil 33 the power is applied through the power feeding loop antenna 32. When the power feeding helical coil 33 is applied with the power, the power is fed in non-contact manner to the power receiving loop antenna 52 by electromagnetic induction, and to the road 7 connected with the power receiving loop antenna 52 through the AC/DC converter 53.

Then, a method of designing the power feeding system 1 of the present invention is discussed. The inventors of this invention simulated a transit characteristic near the frequency f0 in the power feeding system 1 (hereafter referred to as a product A) in which the characteristic impedance of the power feeding unit 3 and the power receiving unit 5 is set to 50 ohms, the capacities of the capacitors C1, C2 are adjusted such as the frequency f0 becomes resonance frequency. Consequently, high transit characteristic can be obtained over a wide range near the frequency f0, and the power feeding helical coil 33 and the power receiving helical coil 51 is critically coupled.

Then, the inventors of this invention simulated transit characteristic and reflection characteristic near the frequency 0.1f0 in the power feeding system 1 (hereafter referred to as a product B) in which the capacities of the capacitors C1, C2 are only adjusted so as the frequency 0.1f0 becomes resonance frequency in the product A in which near the frequency f0 critical coupling is obtained. The result thereof is shown in FIG. 3. As shown in the figure, near resonance frequency, 0.1f0 the power feeding helical coil 33 and the power receiving helical coil 51 is coupled so closely that the band is consequently divided into two, so as the band becomes narrower.

Furthermore, the inventors simulated transit characteristic and reflection characteristic near the frequency 0.001f0 in the power feeding system 1 (hereafter referred to as a product C) in which the capacities of the capacitors C1, C2 are only adjusted so as the frequency 0.001f0 becomes resonance frequency in the product A in which near the frequency f0 critical coupling is obtained. The result thereof is shown in FIG. 4. As shown in the figure, near the frequency 0.001f0 the power feeding helical coil 33 and the power receiving helical coil 51 is coupled too closely to obtain transit characteristic.

Then, the inventors, in order to study a method of adjusting coupling between the power feeding helical coil 33 and the power receiving helical coil 51 without changing the sizes and the distance of the power feeding helical coil 33 and the power receiving helical coil 51, simulated impedance characteristic near the frequency 0.1f0 in the product B. The result thereof is shown in FIG. 5. The inventors also simulated in the product C impedance characteristic near the frequency 0.001f0. The result thereof is shown in FIG. 6.

As shown in the figure, in the product B, the impedance of the power feeding unit 3 and the power receiving unit 5 near the frequency 0.1f0 becomes lower than 50 ohms (1 corresponding to 50 ohms in the FIG. 5). The impedance near the frequency 0.001f0 in the product C becomes much lower than 50 ohms (1 corresponding to 50 ohms in the FIG. 6)

Then, the inventors simulated transit characteristic, reflection characteristic, and characteristic impedance near the frequency 0.1f0 in the power feeding system 1 (hereafter referred to as a product D) in which impedances of the DC/AC converter 31 and the AC/DC converter 53 are adjusted, and the capacities of the capacitors C1, C2 are adjusted so as the frequency 0.1f0 becomes resonance frequency. The result thereof is shown in FIGS. 7, 8. Note that the sizes and the between-coils distances of the helical coils 33, 51 of the power feeding unit and the power receiving unit in the product A and those 33, 51 of the power feeding unit and the power receiving unit in the product D are the same to each other. As can be seen from the figures, impedance of the characteristic impedance can be found so as to reach critical coupling.

Also, the inventors simulated transit characteristic, reflection characteristic, and characteristic impedance near the frequency 0.001f0 in the power feeding system 1 (hereafter referred to as a product E) in which impedances of the DC/AC converter 31 and the AC/DC converter 53 are adjusted, and the capacities of the capacitors C1, C2 are adjusted so as the frequency 0.1f0 becomes resonance frequency. The result thereof is shown in FIGS. 8, 10. Note that the sizes and the between-coils distances of the helical coils 33, 51 of the power feeding unit and the power receiving unit in the product A and those 33, 51 of the power feeding unit and the power receiving unit in the product D are the same to each other. As can be seen from the figures, decrease of the characteristic impedance can be found so as to reach critical coupling.

Namely, the inventors found that adjusting of impedances of the power feeding unit 3 and the power receiving unit 5 allows coupling condition of the helical coils 33, 51 of the power feeding unit and the power receiving unit to be adjusted, arriving at the present invention.

Then, in designing the power feeding system 1, by adjusting impedances of the DC/AC converter 31 and the AC/DC converter 53, the smaller the desired resonance frequency becomes, the smaller the impedances of the power feeding unit 3 and the power receiving unit 5 as shown in FIG. 11. E.g., capacity of a capacitor or inductor of coils incorporated in the DC/AC converter 31 and AC/DC converter 53 is adjusted. Herein as capacitor or coil used in the DC/AC converter 31 and the AC/LC converter 53 capacitor of inductor are used of which capacity or inductance are so fixed as to obtain resonance coupling, but capacity or inductance may be adjusted using variable capacitor or coil varying its capacity or its inductance.

In the frequency in which the characteristic impedance exceeds 50 ohms, adjusting distances between the power feeding loop antenna 32 and the power feeding helical coil 33, and between the power receiving loop antenna 52 and the power receiving helical coil 51 allows critical coupling to be obtained. Lack of the characteristic impedance of 50 ohms poses problem of interface with conventional high frequency circuit, but as impedance transforming method for this case, there are various technologies such as using λ/4 transmission line, or using L/C circuit, or using trance, and combination of these achieves the interface of circuit.

According to the aforementioned embodiment, since the impedances of the power feeding unit 3 and the power receiving unit 5 are adjusted to be small, the critical coupling at the desired resonance frequency, without adjusting the size or the distance of the coils, can be achieved, and high transmission efficiency over wide range can be achieved as well.

Note that according to the embodiment, such as, but not limited to, impedances of the DC/AC converter 31 or AC/DC converter 53 is adjusted. For example, an adjuster composed of capacitor and inductance is provided with the power feeding unit 3 and the power receiving unit 5, impedance of the adjuster is adjusted, and thus possibly designing such that the smaller the resonance frequency of the power feeding unit 3 and the power receiving unit 5 becomes, the smaller the impedance of the resonance frequency of the power feeding unit 3 and the power receiving unit 5.

### A second embodiment

With reference to FIGS. 12 and 13 a power feeding system according to a second embodiment is discussed. FIG. 12 is the view illustrating the power feeding system in which the method of the power feeding system is achieved in the second embodiment of the invention. FIG. 13 is the perspective view illustrating the power feeding loop antenna, the power feeding helical coil, the power receiving helical coil, and the power receiving loop antenna that compose the power feeding system shown in FIG. 12. As shown in the figure, the power feeding system 1 is provided with a power feeding unit 3 as a power feeding means disposed on a road 3, a power receiving unit 5 as a power receiving means disposed in such a body of an automobile 4.

The power feeding unit 3 is provided with a DC/AC (direct current to alternating current) converter 31 converting direct current power supplied from (direct current power source 6 into an alternating current power, a power feeding loop antenna 32 to which the alternating current power converted by the DC/AC converter 31 is supplied, a power feeding helical coil 33 arranged spaced from, opposed to, in its central direction, the power feeding loop antenna 32 and electromagnetically coupled as a power feeding coil with the power feeding loop antenna 32, a capacitor C1 connected in parallel with the power feeding helical coil 33, and a variable inductance L1 as an adjuster.

The power feeding loop antenna 32 is formed into a circular loop shape, and is arranged such as a central axis thereof is arranged in a direction toward the body of the automobile 4 from the road 2, namely, along a vertical direction. Both ends of the power feeding loop antenna 32 have the DC/AC converter 31 connected therewith, and are supplied with the alternating current power converted by the DC/AC converter 31 as mentioned above.

The power feeding helical coil 33 is formed such as to circularly wind a winding wire. In the present embodiment the power feeding helical coil 33 has the winding wire wound in one turn, but wound in two turns or more. The power feeding helical coil 33 is arranged near the automobile 4 relative to the power feeding loop antenna 32 coaxially with the power feeding loop antenna 32. The power feeding loop antenna 32 and the power feeding helical coil 33 are arranged within their being electromagnetically coupled with otter, namely, within a range that alternating current power supplied to the power feeding loop antenna 32 generates electromagnetic induction in the power feeding helical coil 33, and spaced from each other.

The capacitor C1 is provided for adjusting the resonance frequency. The various inductance L1 varies in and inductance in accordance with adjusting signal outputted from the CPU 9 to be mentioned below.

The power receiving unit 5 is provided with a power receiving helical coil 51 electromagnetically resonating with the power feeding helical coil 33, a power receiving loop antenna 52 arranged such as opposed to this power receiving helical coil 51 in its central axis direction and electromagnetically coupled with the power receiving helical coil 51, an AC/DC converter 53 converting alternating current power received by the power receiving loop antenna 52 into direct current power, and a capacitor C2 connected in parallel with the power receiving helical coil 51.

The power receiving loop antenna 52 is connected to a load 7 such as a car battery through the AC/DC converter 53. The power receiving loop antenna 52 is also formed into a circular loop shape, of which center axis is arranged in a direction toward the road 2 from the body of the automobile 4, namely, along a vertical direction. In the present invention, as shown in FIG. 13, the aforementioned power receiving loop antenna 52 is also arranged to have such as, but not limited to, the same diameter as the aforementioned power feeding loop antenna 32, for example, the diameter of the power receiving loop antenna 52 may be arranged smaller than the aforementioned power feeding loop antenna 32.

The power receiving helical coil 51 is formed such as to circularly wind a winding wire. In the present embodiment the power receiving helical coil 51 has, in the same way as the power feeding helical coil 33, the winding wire wound in one turn, but possibly wound in two turns or more. The power receiving helical coil 51 is arranged to have such as, but not limited to, the same diameter as the aforementioned power feeding helical coil 33, for example, the diameter of the power receiving unit helical oil 51 may be arranged smaller than the aforementioned power feeding helical coil 33.

The power receiving helical coil 51 is arranged near the road 2 relative to the power feeding loop antenna 32 coaxially with the power receiving loop antenna 52. It follows from this that the power receiving loop antenna 52 and the power receiving helical coil 51 are arranged within their being electromagnetically coupled with each other, namely, within flow of alternating current power into the power receiving helical coil 51 generating electromagnetic induction in the power receiving loop antenna 52, and spaced from each other. The capacitor C2 is in the same way as the capacitor 1, provided for adjusting the resonance frequency. These capacitors of the capacitors C1, C2 are preliminarily adjusted so as the resonance frequency between the power feeding helical coil 33 and the power receiving helical coil 51 becomes desired resonance frequency f0.

According to the aforementioned power feeding system 1, when the power receiving unit 5 in the automobile 4 approaches the power feeding unit 3 disposed in the road 2, and the power feeding helical coil 33 and the power receiving helical coil 51 are opposed to, spaced from, each other in the central axis direction, the power feeding helical coil 33 and the power receiving helical coil 51 are electromagnetically resonated so as to supply power in non-contact manner to the power receiving unit 5 from the power feeding unit 3.

To explain more in detail, when alternating current power is applied to the power feeding loop antenna 32, the power is fed to the power feeding helical coil 33 through electromagnetic induction. Namely, to the power feeding helical coil 33 the power is applied through the power feeding loop antenna 32. When the power feeding helical coil 33 is applied with the power, the power is fed in non-contact manner to the power receiving loop antenna 52 by electromagnetic induction, and to the road 7 connected with the power receiving loop antenna 52 through the AC/DC converter 53.

The aforementioned power feeding system 1 is also, as shown in FIG. 12, provided with a switch 8 disposed between the DC power source 6 and DC/AC converter 31, a CPU 9 wholly controlling power feeding unit 3, and a position sensor 10 detecting relative position between the power feeding helical coil 33 and the power receiving helical coil 51.

The CPU 9 is connected with the switch 8 and a receiver 10b to be mentioned below. The position sensor 10 is provided with a transmitter 10a mounted in the automobile 4 and arranged near the power receiving helical coil 51, and a receiver 10b arranged near the road 2, and near the power feeding helical coil 33. The transmitter 10a is disposed at the body of the automobile 4 so as to be arranged near the power receiving helical coil 51. This transmitter 10a is composed of, for example, a light emitting device emitting a spot light, and a control circuit controlling emitting light of this light emitting device, and emits at regular intervals the spot light downwardly and vertically.

The receiver 10a is arranged on the road 2 such as to be arranged near the power feeding helical coil 33. The receiver 10b is composed of a light receiving device having a light receiving face formed which receives the spot light, and a detector circuit outputting a position signal in accordance with a position on the light receiving face to which this spot light is delivered, and the like, and outputs the position signal from the detector circuit to the CPU 9.

The CPU 9 detects a relative position between the power feeding helical coil 33 and the power receiving helical coil 51 in accordance with a position signal from the receiver 10b. E.g. , the CPU 9 detects a misalignment d (FIG. 16) between central axis Z1 of the power feeding helical coil 33 (FIG. 13) and central axis Z2 of the power receiving helical coil 51 (FIG. 13) as a relative position. Note that in the present embodiment, as the position sensor 10 an example using such as, but not limited to, optical types as mentioned above is discussed, and instead may use well known types of position sensor 1 such as ultrasonic types or wireless types. As can be seen from the above, the aforementioned position sensor 10 and the CPU 9 compose a position detecting means in the claims.

Then, before discussing an operation of the power feeding system 1, principle of this invention is discussed. Firstly, the inventors adjusted inductance of the various inductor L1 so as to obtain highest efficiency with the misalignment d of 0 to adjust impedance of the power feeding unit 3, and simulated a transmission efficiency S21² of the power receiving loop antenna 52 near the frequency f0. The result thereof is shown by dotted line in FIG. 14. As shown in the figure, with the misalignment d of 0, the transmission efficiency S21² of 97% can be achieved.

Then, the inventors made the misalignment d of 0.375D (D equals a diameter of the power receiving helical coil 51), and simulated a transmission efficiency S21² of the power receiving loop antenna 52 near the frequency f0. The result thereof is shown by dashed-dotted line in FIG. 14. Note that an inductance of the various inductor L1 is the same as adjusted upon the misalignment d of 0. As shown in the figure, induction of the misalignment d causes reduction of the transmission efficiency S21² of the order of 87%.

Thus, reduction of the transmission efficiency S21² is possibly attributed to that even if impedance between the power feeding unit 3 and the power receiving unit 5 upon the misalignment d of 0 is matched, induction of the misalignment d breaks impedance matching, and thus power from the power feeding unit 3 reflects on the power receiving unit 5. Therefore, the inventors again adjusted the inductance of the inductor L1 upon the misalignment of 0.375D to adjust the impedance of the power feeding unit 3, simulated a transmission efficiency S21² of the power receiving loop antenna 52 near the frequency f0. The result thereof is shown by line in FIG, 14. As shown in the figure, adjustment of impedance improved the transmission efficiency S21² to of the order of 93%.

Thus, relationship between the misalignment and the inductance of the various inductor L1 in which the best transmission efficiency S21² is obtained is obtained through simulations or experiments, and such table exhibiting the obtained relationship is preliminarily stored in a not-shown memory. Then, the CPU 9 introduces from the table stored in the memory and inductance corresponding to the misalignment d detected by the position signal by the receiver 10b, and outputs adjustment signal to the various inductance L1 so as to be introduced inductance.

Then, detailed operation for the power feeding system 1 is discussed about which is briefly disused in the above. First, the CPU 9 reads the position signal of the receiver 10a and determine whether the spot light is received. Reception of the spot light determines that the automobile 2 stays closely, and the CPU 9 then obtain the misalignment d of center axes of Z1, Z2, in accordance with the position signal from the receiver 10b.

The CPU 9, after that serving as impedance adjusting means, introduces the inductance corresponding to the obtained misalignment d from such table stored in the memory, and outputs adjustment signal to the various inductance L1 so as to be introduced inductance. Then, the CPU 9 switches on the switch 8 to supply alternating current power of the power feeding loop antenna 32. It follows from this that power is fed wirelessly, keeping high efficiency, to the power receiving unit 5 from the power feeding unit 3.

After that, the CPU 9 again introduces position signal of the receiver 10b, and no spot light received determines that the automobile 2 moves away, switching off the switch 8 to block the alternating current power to be supplied with the power feeding loop antenna 32.

According to the power feeding system 1, since the CPU 9, using the position sensor 10, adjusts the various inductor L1 in accordance with the misalignment d between the center axis Z1 of the detected power feeding helical coil 33 and the center axis Z2 of the power receiving helical coil 51, and adjusts the impedance of the power feeding unit 3 to which the various inductor L1 is disposed, it is made possible to reduce deterioration of the transmission efficiency caused by the misalignment d between the power feeding helical coil 33 and the power receiving helical coil 51, and to supply power in high efficiency to the power feeding unit 3 to power receiving unit 5.

According to the aforementioned power feeding system 1, since the CPU 9, using the position sensor 9, detects misalignment d as relative position between the center axis Z1 of the detected power feeding helical coil 33 and the center axis Z2 of the power receiving helical coil 51, it is made possible to reduce deterioration of the transmission efficiency caused by the misalignment d between the center axes Z1, Z2, and to supply power in high efficiency to the power feeding unit 3 to power receiving unit 5.

Note that the aforementioned embodiment discloses such as, but not limited to, the power feeding helical coils 33, and the power receiving helical coil 51. The power feeding helical coils 33 and the power receiving helical coil 51 may be turned in one turn or three turns. The inventors, in order to verifying obtaining the above efficiency in the case of the other number of turns, simulated transmission efficiency S21² near the frequency f0 in the power feeding system 1 in which the power feeding helical coil 33 and the power receiving helical coil 51 are turned in one, with matching at misalignment d of 0, with matching at misalignment d of 0.375, and with no matching at misalignment d of 0.375, respectively. The result thereof is shown in FIG. 15.

As shown in the figure, with the misalignment d of 0, transmission efficiency S21² was 95%. To the contrary, with no matching at the misalignment d of 0.375D, transmission efficiency S21² decreased to 73%. With matching using various inductance L1, transmission efficiency S21² was found to improve to 85%.

In the aforementioned embodiment, only the power feeding unit 3 includes, but is not limited to, as the adjuster the various inductor L1. For example, to the receiver 5 the adjuster may only be disposed, or to both the power feeding unit 3 and the power receiving unit 5 may be disposed.

The aforementioned embodiment uses such as, but is not limited to, the various inductance L1 as the adjuster. As the adjuster, may be used what is well know such as capacitor, combination of capacitor and inductance or so.

In the aforementioned embodiment, to the power feeding helical coil 33 such as, but the invention is not limited to, the various inductance L1 is connected as the adjuster. Since the present invention may match impedances between the power feeding unit 3 and the power receiving unit 5, the adjuster may be disposed in the power feeding loop antenna 32, or the power receiving loop antenna 52, otherwise, in the DC/AC converter 31 or the AC/DC converter 53.

Also, in the aforementioned embodiment, such as, but not limited to, the various inductor L1 is adjusted so as to detect the misalignment d and to reduce deterioration of the transmission efficiency caused by the misalignment d. For example, a distance X (FIG. 13) between the power feeding helical coil 33 and the power receiving helical coil 51 in the central axis is detected, the various inductance L1 my be adjusted so as to prevent deterioration of the transmission efficiency caused by fluctuation of the distance.

Furthermore, the aforementioned embodiments merely show, but are not limited to, typical embodiment of the present invention. Namely, it is to be understood that various changes and modifications will be apparent to those skilled in the art. Therefore, unless otherwise such changes and modifications depart from the scope of the present invention hereafter defined, they should be construed as being included therein.

### [Reference Signs List]

- 1: power feeding system
- 3: power feeding unit (power feeding means)
- 5: power receiving unit (power receiving means)
- 9: CPU (impedance adjusting means, position detecting means)
- 10: position sensor (position detecting means)
- 33: power feeding helical coil (power feeding coil)
- 31: DC/AC converter (direct current to alternating current converter)
- 53: AC/DC converter (alternating current converter to direct current)
- 51: power receiving helical coil (power receiving coil)
- L1: various inductance

## Claims

1. A method of designing power feeding system including a power feeding unit having a power feeding coil to which power is supplied, and a power receiving unit having a power receiving coil receiving power from the power feeding coil by electromagnetically resonating with the power feeding coil, the method comprising the steps of:
designing such that the smaller a resonance frequency between the power feeding coil and the power receiving coil becomes,
the smaller impedances of the power feeding and the power receiving unit become, without changing sizes and a between-coils-distance of the power feeding coil and the power receiving coil.

2. The method of designing power feeding system as claimed in claim 1, wherein the power feeding unit includes a DC/AC converter converting DC power to AC power, the AC power being supplied to the power feeding coil, and wherein the power receiving unit includes an AC/DC converter converting AC power received by the power receiving coil to DC power, the method further comprising the step of;
designing such that the smaller the resonance frequency of the power feeding coil and the power receiving coil becomes by adjusting impedances of the DC/AC converter and the AC/DC converter, the smaller the impedances of the power feeding and the power receiving unit become.

3. The method of designing power feeding system as claimed in claim 1, wherein at least one of the power feeding unit and the power receiving unit includes an adjuster adjusting an impedance of the disposed at least one of the power feeding unit and the power receiving unit, the method further comprising the step of;
designing such that the smaller the resonance frequency of the power feeding coil and the power receiving coil becomes by adjusting the impedance of the adjuster, the smaller the impedances of the power feeding and the power receiving unit become.

4. A power feeding system, comprising:
a power feeding unit having a power feeding coil to which power is supplied,
a power receiving unit having a power receiving coil receiving power from the power feeding coil by electromagnetically resonating with the power feeding coil,
an adjuster disposed to at least one of the power feeding unit and the power receiving unit, and varying an impedance of the disposed at least one of the power feeding unit and the power receiving unit,
a position detector detecting a relative position between the power feeding coil and the power receiving coil,
an impedance adjuster adjusting the adjuster in accordance with the relative position detected by the position detector so as to adjust the impedance of the at least one of the power feeding unit and the power receiving unit provided with the adjuster.

5. The power feeding system as claimed in claim 4, wherein the position detector detects misalignment between center axes of the power feeding coil and the power receiving coil as the relative position.
